# EUROPÄISCHE PATENTANMELDUNG

(11) **EP 0 556 665 A1**
(43) Veröffentlichungstag der Anmeldung: **25.08.1993**
(21) Anmeldenummer: 93101808.9
(22) Anmeldetag: 05.02.1993
(51) Int. Cl.: B29C 47/06, B29C 67/22, B29C 47/90

(54) **Verfahren zur Herstellung eines Rohres aus Kunststoff**

(30) Priorität: 18.02.1992 DE 4204759
(71) Anmelder: FRIEDRICH THEYSOHN GmbH, D-30853 Langenhagen (DE)
(72) Erfinder: Krüger, Ernst, Dr.-Ing., W-4504 Georgsmarienhütte (DE)
(74) Vertreter: Döring, Roger, Dipl.-Ing.

(57) **Zusammenfassung**

Es wird ein Verfahren zur Herstellung eines Rohres aus Kunststoff angegeben, dessen Wandung aus einer ungeschäumten Innenschicht und einer dieselbe umgebenden Schicht aus geschäumtem Material besteht. Dazu wird zunächst ein Innenrohr (2) aus ungeschäumtem Kunststoff mittels einer ersten Plastifiziereinrichtung erzeugt und unter Abkühlung kalibriert. Anschließend wird mit einem Schaumerzeuger versetzter Kunststoff (8) mittels einer zweiten Plastifiziereinrichtung auf das Innenrohr (2) aufgebracht und danach aufgeschäumt Das beschichtete Innenrohr (2) wird unmittelbar nach dem Aufbringen des mit dem Schaumerzeuger versetzten Kunststoffs (8) in eine Kalibrier- und Kühleinrichtung (9) eingebracht und bei kontinuierlicher Bewegung solange durch dieselbe gezogen, bis der Aufschäumvorgang beendet ist.

## Beschreibung

Die Erfindung bezieht sich auf ein Verfahren zur Herstellung eines Rohres aus Kunststoff, dessen Wandung aus einer ungeschäumten Innenschicht und einer dieselbe umgebenden Schicht aus geschäumtem Material besteht, bei welchem das aus einer Plastifiziereinrichtung austretende Rohr kalibriert und gekühlt sowie mittels einer Abzugsvorrichtung abgezogen wird (US-PS 4,364,882).

Rohre aus Kunststoff werden beispielsweise für die Kanalisation zum Abführen von Regenwasser oder Abwässern eingesetzt. Sie können auch im Hausbereich als Fallrohre und allgemein überall dort verwendet werden, wo Flüssigkeiten transportiert werden sollen, also auch in an sich trockener Umgebung. Die Kosten für die Rohre werden im wesentlichen durch die einzusetzende Materialmenge bestimmt. Das macht sich insbesondere bei Rohren mit größeren Durchmessern und entsprechend dicker, stabiler Wandung bemerkbar. Zur Senkung der Herstellungskosten für Rohre aus Kunststoff ist es daher bekannt geworden, deren Wandung aus geschäumtem Material herzustellen, das sowohl innen als auch außen von einer nicht geschäumten Schicht begrenzt ist. Der Aufwand an teurem Kunststoff kann dadurch vermindert werden, ohne daß die Stabilität der Rohre beeinträchtigt wird.

Aus der eingangs erwähnten US-PS 4,364,882 ist ein Verfahren zur Herstellung derartiger Rohre bekannt. Zur Durchführung dieses Verfahrens werden zwei Platifiziereinrichtungen - im folgenden kurz "Extruder" genannt - eingesetzt, von denen die eine ungeschäumten Kunststoff und die andere mit einem Schaumerzeuger versetzten Kunststoff liefert. In einem an beide Extruder angeschlossenen Werkzeug wird der Strom aus ungeschäumtem Kunststoff so in zwei rohrförmige Teilströme aufgeteilt, daß der eine Teilstrom innerhalb des anderen liegt. Der den Schaumerzeuger enthaltende Kunststoff wird in den umlaufenden Zwischenraum zwischen den beiden Teilströmen gebracht. Das Rohr wird danach mit dem gewünschten Durchmesser kalibriert und abgekühlt. Dieses bekannte Verfahren ist wegen des komplizierten Werkzeugs mit den Führungen für drei getrennte Materialströme sehr aufwendig und wegen der isolierenden Wirkung des Schaumes zur durch den einen Teilstrom gebildeten Innenschicht nur mit relativ niedriger Geschwindigkeit durchführbar. Es kann außerdem dazu führen, daß die innere Oberfläche des fertigen Rohres eingedellt bzw. gewellt ist, da die materialarme Schicht des nach innen geführten Teilstroms durch das aufschäumende Material unkontrolliert verformt werden kann. Ein derartiges Rohr hat gegenüber einem innen glatten, nicht gewellten Rohr einen erhöhten Strömungswiderstand. Es ist daher in vielen Fällen nicht einsetzbar. Ähnliche, mit den gleichen Nachteilen arbeitende Verfahren, gehen aus der US-PS 4,731,002 und der FR-PS 2.591.527 hervor.

Der Erfindung liegt die Aufgabe zugrunde, das eingangs geschilderte Verfahren zu vereinfachen und gleichzeitig sicherzustellen, daß das erzeugte Rohr bei größerer Produktionsgeschwindigkeit über seine ganze Länge eine glatte innere Oberfläche ohne Wellungen oder Verwerfungen hat.

Diese Aufgabe wird gemäß der Erfindung dadurch gelöst,
- daß zunächst ein Innenrohr aus ungeschäumtem Kunststoff mittels eines ersten Extruders erzeugt und unter Abkühlung kalibriert wird,
- daß anschließend mit einem Schaumerzeuger versetzter Kunststoff mittels eines zweiten Extruders auf das Innenrohr aufgebracht und danach aufgeschäumt wird und
- daß das beschichtete Innenrohr unmittelbar nach dem Aufbringen des mit dem Schaumerzeuger versetzten Kunststoffs in eine Kalibrier- und Kühleinrichtung eingebracht und bei kontinuierlicher Bewegung solange durch dieselbe gezogen wird, bis der Aufschäumvorgang beendet ist.

Zur Durchführung dieses Verfahrens können in der Rohrherstellung übliche Maschinen eingesetzt werden, die ohne Zusatzwerkzeuge betrieben werden können. Das Innenrohr kann mit wenig Materialeinsatz dünnwandig ausgeführt sein. Es wird nach dem Austritt aus dem Extruder sofort kalibriert und gekühlt, so daß es genaue Abmessungen und glatte Oberflächen erhält. Nach Kalibrierung und Abkühlung hat das Innenrohr außerdem eine ausreichende Stabilität, so daß es beim Aufschäumen des mit dem Schaumerzeuger versetzten Kunststoffs nicht verformt wird. Der aufschäumende Kunststoff wird direkt hinter dem Extruder in die gekühlte Kalibrierung geführt, in welcher der Aufschäumvorgang abläuft. Da die äußere Oberfläche des geschäumten Kunststoffs gezielt abgekühlt werden kann, wird in bevorzugter Ausführungsform eine ungeschäumte äußere Schicht von variabler Dicke mit einer glatten äußeren Oberfläche erzeugt. Zusätzliches ungeschäumtes Material für die Außenschicht des Rohres wird dann nicht benötigt. Das ganze Verfahren ist also mit üblichen Maschinen einfach durchführbar und es kann mit hoher Geschwindigkeit arbeiten, da keine komplizierten Materialführungen verwendet werden und das kalte Innenrohr zusätzlich zur Kühlung beiträgt.

Weitere vorteilhafte Ausgestaltungen der Erfindung gehen aus den Unteransprüchen hervor.

Das Verfahren nach der Erfindung wird anhand der Zeichnungen als Ausführungsbeispiel erläutert.

Es zeigen:
Fig. 1 einen Querschnitt durch ein mit dem Verfahren nach der Erfindung hergestelltes Rohr.
Fig. 2 eine Vorrichtung zur Durchführung des Verfahrens in schematischer Darstellung.
Fig. 3 einen Ausschnitt aus Fig. 2 in vergrößerter Darstellung.

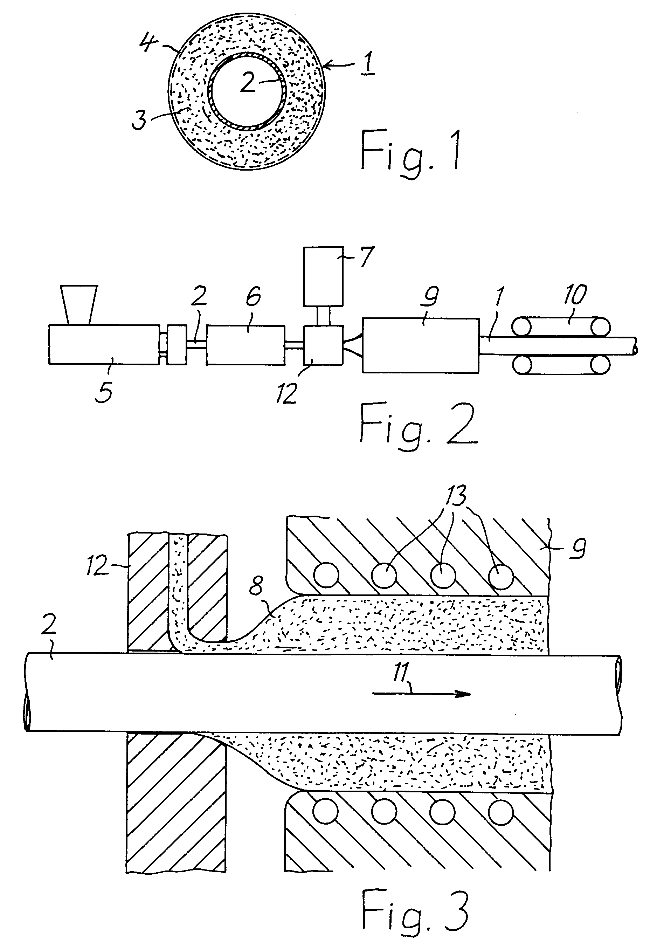

Das in Fig. 1 im Querschnitt dargestellte Rohr 1 besteht aus einem stabilen Kunststoff, wie beispielsweise Polyvinylchlorid, Polyethylen oder einem anderen Polyolefin, Polystyrol oder Acrylnitril - Butadien - Styrol - Copolymere (ABS). Die Wandung des Rohres 1 ist aus einem Innenrohr 2 aus nicht geschäumtem Material und einer darüberliegenden Schicht 3 aus geschäumtem Material aufgebaut, die in ihrem Außenbereich so verdichtet ist, daß sich eine ungeschäumte Außenschicht 4 mit glatter äußerer Oberfläche ergibt. Die Außenschicht 4 ist etwa durch eine in Fig. 1 gestrichelt eingezeichnete Linie begrenzt. Das Innenrohr 2 und die Schicht 3 können fest miteinander verbunden, insbesondere verschweißt, sein. Eine solche feste Verbindung kann sich direkt beim Aufbringen der Schicht 3 auf das Innenrohr 2 ergeben, besonders dann, wenn für beide Teile das gleiche Material verwendet wird. Innenrohr 2 und Schicht 3 müssen aber nicht fest miteinander verbunden sein.

Zur Herstellung des Rohres 1 wird zunächst das Innenrohr 2 mittels eines Extruders 5 erzeugt und einer gekühlten Kalibriereinrichtung 6 zugeführt. Auf das stabile Innenrohr 2 wird mittels eines Extruders 7 Kunststoff 8 (Fig. 3) aufgebracht, der einen Schaumerzeuger enthält. Das mit dem Kunststoff 8 beschichtete Innenrohr 2 wird unmittelbar hinter dem Extruder 7 in eine Kalibrier- und Kühleinrichtung 9 geleitet, in welcher der die Schicht 3 des Rohres 1 bildende Kunststoff 8 aufgeschäumt, abgekühlt und kalibriert wird. Durch die Kühlung des aufschäumenden Kunststoffs 8 kann sich an seiner Umfangsfläche die ungeschäumte, glatte Außenschicht 4 des Rohres 1 ergeben, so wie es im Querschnitt in Fig. 1 dargestellt ist.

Bei dieser bevorzugten Ausführungsform des Verfahrens nach der Erfindung wird die Länge der Kalibrier- und Kühleinrichtung 9 so bemessen, daß sich für das fertige Rohr 1 eine ungeschäumte Außenschicht 4 gewünschter Dicke ergibt. Dabei gehen der Grad der Kühlung, die Geschwindigkeit, mit der das Rohr 1 bewegt wird, der Durchmesser des Rohres 1 und die Dicke der Außenschicht 4 sowie die Rezeptur des mit dem Schaumerzeuger versetzten Kunststoffs als Parameter ein. Die Kalibrier- und Kühleinrichtung 9 wird vorzugsweise aus mehreren hintereinander liegenden Segmenten aufgebaut. Das fertige Rohr 1 kann mit einem Raupenabzug 10 oder einem beliebigen anderen Abzug durch die Fertigungsvorrichtungen gezogen und einer weiteren Bearbeitung zugeführt werden.

Das Verfahren kann entsprechend Fig. 2 mit einer Tandemanordnung der beiden Extruder 5 und 7 in einem Arbeitsgang durchgeführt werden. Es ist aber auch möglich, das Innenrohr 2 vorzufertigen und beispielsweise auf eine Spule aufzuwickeln, von der es zur Herstellung des Rohres 1 abgezogen wird. In beiden Fällen kann das Innenrohr 2 dünnwandig und damit materialarm ausgeführt werden. Es ist stabil genug, um den beim Aufschäumen des Kunststoffs 8 auftretenden Kräften zu widerstehen, ohne verformt zu werden.

Die Kalibrier- und Kühleinrichtung 9 wird - in der durch den Pfeil 11 angegebenen Bewegungsrichtung des Innenrohres 2 gesehen - unmittelbar hinter dem Spritzkopf 12 des Extruders 7 angeordnet. Der vom Extruder 7 geförderte Kunststoff 8 beginnt direkt nach dem Austritt aus dem Spritzkopf 12 aufzuschäumen und dementsprechend sein Volumen zu vergrößern, so wie es in Fig. 3 dargestellt ist. Die Volumenvergrößerung wird durch die Kalibrier- und Kühleinrichtung 9 einerseits sowie das stabile Innenrohr 2 andererseits begrenzt. Für die Kühlung innerhalb der Kalibrier- und Kühleinrichtung 9 kann beispielsweise Wasser verwendet werden, das durch Kanäle 13 bewegt oder auch in direkten Kontakt mit der Oberfläche des Kunststoffs 8 gebracht wird. Durch intensive Kühlung kann der Außenbereich des aufschäumenden Kunststoffs 8 verdichtet werden, so daß sich die nichtgeschäumte und außen glatte Schicht 4 ergibt.

Für besondere Einsatzfälle kann die Schicht 3 des Rohres 1 auch aus offenporigem Schaum bestehen. Der aufschäumende Kunststoff 8 wird dann in der Kalibrier- und Kühleinrichtung 9 nur kalibriert, ohne daß sich die nichtgeschäumte Außenschicht 4 ergibt. Solche Rohre sind beispielsweise dort einsetzbar, wo eine trockene Umgebung gewährleistet werden kann.

Über der geschäumten Schicht 3 könnte auch noch ein Außenrohr aus ungeschäumtem Kunststoff angebracht werden. Dazu könnte ein weiterer Extruder eingesetzt werden, so daß auch ein Rohr mit einem derartigen Außenrohr in einem Arbeitsgang hergestellt werden könnte.

Zur besseren Abfuhr der Wärme aus dem aufschäumenden Kunststoff 8 können demselben thermisch leitende Füllstoffe hinzugegeben werden. Solche Füllstoffe sind beispielsweise Aluminiumflitter. Die mit diesen Zusätzen gebildete Schicht 3 des Rohres 1 wird zusätzlich mechanisch stabilisiert.

## Patentansprüche

1. Verfahren zur Herstellung eines Rohres aus Kunststoff, dessen Wandung aus einer ungeschäumten Innenschicht und einer dieselbe umgebenden Schicht aus geschäumtem Material besteht, bei welchem das aus einer Plastifiziereinrichtung austretende Rohr kalibriert und gekühlt sowie mittels einer Abzugsvorrichtung abgezogen wird, dadurch gekennzeichnet,
- daß zunächst ein Innenrohr (2) aus ungeschäumtem Kunststoff mittels einer ersten Plastifiziereinrichtung (5) erzeugt und unter Abkühlung kalibriert wird,
- daß anschließend mit einem Schaumerzeuger versetzter Kunststoff (8) mittels einer zweiten Plastifiziereinrichtung (7) auf das Innenrohr (2) aufgebracht und danach aufgeschäumt wird und
- daß das beschichtete Innenrohr (2) unmittelbar nach dem Aufbringen des mit dem Schaumerzeuger versetzten Kunststoffs (8) in eine Kalibrier- und Kühleinrichtung (9) eingebracht und bei kontinuierlicher Bewegung solange durch dieselbe gezogen wird, bis der Aufschäumvorgang beendet ist.

2. Verfahren nach Anspruch 1, dadurch gekennzeichnet, daß der aufschäumende Kunststoff (8) in der Kalibrier- und Kühleinrichtung (9) so behandelt wird, daß sich eine nicht geschäumte, außen glatte Außenschicht (4) ergibt.

3. Verfahren nach Anspruch 1, dadurch gekennzeichnet, daß der aufschäumende Kunststoff (8) in der Kalibrier- und Kühleinrichtung (9) so behandelt wird, daß sich ein offenporiger Schaum ergibt.

4. Verfahren nach einem der Ansprüche 1 bis 3, dadurch gekennzeichnet, daß das Rohr (1) mit einer Tandemanordnung der beiden Plastifiziereinrichtungen (5,7) in einem Arbeitsgang hergestellt wird.

5. Verfahren nach einem der Ansprüche 1 bis 4, dadurch gekennzeichnet, daß dem mit dem Schaumerzeuger versetzten Kunststoff (8) zusätzlich thermisch leitende Füllstoffe hinzugegeben werden.

6. Verfahren nach einem der Ansprüche 1 bis 5, dadurch gekennzeichnet, daß auf die Schicht (3) aus geschäumtem Kunststoff (8) ein Außenrohr aus nichtgeschäumtem Kunststoff mittels einer weiteren Plastifiziereinrichtung aufgebracht wird.
